# FASCICULE DE BREVET EUROPEEN

(11) **EP 0 366 520 B1**
(45) Date de publication et mention de la délivrance du brevet: **24.08.1994**
(21) Numéro de dépôt: 89402842.2
(22) Date de dépôt: 13.10.1989
(51) Int. Cl.: G06F 15/16, H04L 12/54

(54) **Réseau de communication de données pour systèmes multiprocesseurs**
Datenübertragungsnetzwerk für Multiprozessorsysteme
Data communication network for multiprocessor systems

(30) Priorité: 26.10.1988 FR 8813969
(43) Date de publication de la demande: 02.05.1990
(73) Titulaire: Office National d'Etudes et de Recherches Aérospatiales (O.N.E.R.A.), 92320 Châtillon-sous-Bagneux (FR)
(72) Inventeur: Cubero-Castan, Michel, F-31400 Toulouse (FR); Durrieu, Guy, F-31650 Saint Orens (FR); Lecussan, Bernard, F-31130 Balma (FR); Lemaitre, Michel, F-31500 Toulouse (FR)
(74) Mandataire: Cabinet Martinet & Lapoux

(56) Documents cités:
- WO-A-86/02511
- WO-A-87/02155
- ICL TECHNICAL JOURNAL, vol. 5, mai 1987, pages 575-594; P. TOWNSEND: "Flagship hardware and implementation"
- PROCEEDINGS OF THE FIFTH ANNUAL INTERNATIONAL PHOENIX CONFERENCE ON COMPUTERS AND COMMUNICATIONS, Scottsdale, Arizona, 26-28 mars 1986, pages 620-624, IEEE, Washington, US; S.E. BUTNER et al.: "A RISC multiprocessor based on circulating context"
- IBM TECHNICAL DISCLOSURE BULLETIN, vol. 28, no. 3, août 1985, pages 1255-1259, New York, US; "Lookaside input buffer for packet switching"
- PROCEEDINGS OF THE 1985 INTERNATIONAL CONFERENCE ON PARALLEL PROCESSING, 20-23 août 1985, pages 807-813, IEEE, Washington, US; C.R. DAS et al.: "Computation availability of multiple-bus multiprocessors"

## Description

L'invention concerne d'une manière générale les réseaux de communication pour la transmission simultanée de messages de données entre une pluralité de dispositifs sources et une pluralité de dispositifs destinataires. Elle concerne plus particulièrement un réseau de communication mettant en oeuvre un dispositif de commutation spécialisé dans le transfert des messages de données. Le dispositif de commutation est appelé processeur de communication, et est destiné à être utilisé dans les systèmes informatiques multiprocesseurs, par exemple pour le traitement parallèle de l'information.

Dans les systèmes multiprocesseurs de traitement parallèle de l'information, les processeurs qui exécutent des programmes, ou processus, à leur rythme propre et d'une façon partiellement asynchrone les uns par rapport aux autres ont besoin, par intermittence, de communiquer entre eux et/ou avec un ensemble de mémoires. Les transferts des messages de données entre les processeurs et mémoires concernés doivent s'effectuer dans des conditions optimales de rapidité, en évitant des conflits d'accès au niveau des moyens de communication. Pour accroître leur puissance, on demande à ces systèmes d'être aptes à exécuter en parallèle un nombre de processus de plus en plus important. Dans ces conditions, il est essentiel de résoudre efficacement :
- les problèmes liés à la communication des messages de données, et
- le problème de la répartition du travail entre les différents processeurs et mémoires du système multiprocesseur.

Un moyen bien connu d'interconnecter plusieurs processeurs consiste à les relier tous à un même bus de communication et à faire appel à une unité de contrôle pour gérer les échanges de messages de données entre processeurs de manière centralisée et hiérarchisée. L'inconvénient majeur de ce moyen de communication par bus unique est de ne pouvoir établir à un instant donné qu'une communication d'un processeur à un autre. Le bus unique est donc d'autant plus pénalisant que le nombre de processeurs à interconnecter est élevé. De plus, cet inconvénient n'est que très partiellement corrigé en multipliant le nombre de bus de communication.

Pour résoudre ces inconvénients, il a été proposé que les messages de données soient échangés à travers des réseaux de communication. Différentes architectures pour ces réseaux et notamment une architecture "Oméga" présentant certains avantages sont décrites par HWANG et BRIGGS dans leur ouvrage intitulé "Computer Architecture and Parallel Processing", Edition Mc GRAW HILL, 1984, p. 350 à 354 et 481 à 502.

Un réseau de communication du type dit "Oméga" décrit par HWANG et BRIGGS permet une amélioration très sensible de la rapidité des transferts d'informations entre processeurs. Toutefois, un tel réseau n'échappe pas à la nécessité de mettre en oeuvre une unité de contrôle centralisée, chargée de déterminer les chemins d'acheminement et de résoudre les conflits d'accès au niveau des dispositifs de commutation. La nécessité de cette unité de contrôle centralisée limite la taille du réseau du fait d'une difficulté de programmation d'autant plus grande que la taille du réseau est importante. Par ailleurs, le problème de la répartition du travail dans ce réseau est traité distinctement de l'acheminement par une autre unité de contrôle qui présente également une difficulté de programmation croissant avec la taille du réseau.

Dans un autre domaine que celui des réseaux de communication multiprocesseurs, le document WO-A-8 602 511 décrit un système de régulation de charges pour noeud de commutation de paquets organisé autour d'un sélecteur de file d'attente. Ce sélecteur de file d'attente sélectionne l'une de plusieurs files d'attente pour écrire chaque paquet entrant. Un circuit de régulation de charges reçoit des informations de charge de chacune des files d'attente et modifie en conséquence un drapeau d'acheminement transmis dans chaque paquet entrant, afin que le paquet soit acheminé par le sélecteur de file d'attente vers la file d'attente ayant une charge la moins élevée.

Dans le cadre d'un réseau de communication multiprocesseurs, un mécanisme identique à celui décrit dans le document précité s'avérerait suffisant seulement si la transmission des messages, et particulièrement des informations de charges était instantanée. Puisque tel n'est pas le cas, il peut se produire que des messages de données, très rapprochés dans le temps et transmis par un dispositif de commutation situé en amont, soient acheminés vers un même dispositif de commutation en aval sans que les informations de charge intermédiaires relatives à chacun des messages n'aient le temps d'être transmises dudit dispositif de commutation en aval vers le dispositif de commutation en amont pour reconfigurer ce dernier, ce qui peut alors entraîner des débordements de files d'attente.

Il est alors nécessaire d'anticiper l'évolution de ces informations de charges dans chaque processeur acheminant un message de données.

A cette fin, un réseau de communication selon l'invention est tel que défini dans la revendication 1. D'autres caractéristiques de ce réseau sont énoncées dans les revendications 2 à 7.

L'invention est applicable, par exemple, à la réalisation de machines informatiques parallèles de traitement symbolique, ces machines mettant en oeuvre des langages formels de traitement de l'information, tel que le langage LISP, particulièrement bien adaptés à la résolution des problèmes complexes qui se posent dans le domaine de l'intelligence artificielle. L'invention est utilisable également dans les systèmes informatiques classiques. Par ailleurs, un réseau de commutation selon l'invention est réalisable sous forme modulaire en technologie VLSI.

D'autres avantages et caractéristiques de l'invention apparaîtront plus clairement à la lecture de la description suivante de plusieurs réalisations préférées du réseau de communication selon l'invention en référence aux dessins annexés correspondants dans lesquels :
- la Fig. 1 montre schématiquement l'architecture générale d'un système multiprocesseur qui inclut deux réseaux de communication selon l'invention ;
- la Fig. 2 est un bloc-diagramme schématique d'un dispositif de commutation selon l'invention, dit processeur de communication ;
- la Fig. 3 est un bloc-diagramme de l'un de deux circuits d'entrée de message inclus dans le dispositif de commutation ;
- la Fig. 4 montre les structures de deux types différents de messages commutables par le dispositif de commutation ;
- la Fig. 5 est un bloc-diagramme de l'un de deux circuits de sortie de message inclus dans le dispositif de commutation ;
- la Fig. 6 est une table de vérité relative au fonctionnement d'un codeur de priorité inclus dans chacun des deux circuits de sortie ;
- la Fig. 7 est un bloc-diagramme d'une unité de gestion de différentiels de charges incluse dans un circuit de régulation de charges du dispositif de commutation ; et
- la Fig. 8 est un bloc-diagramme de l'un de deux circuits de transmission de charges inclus également dans le circuit de régulation de charges.

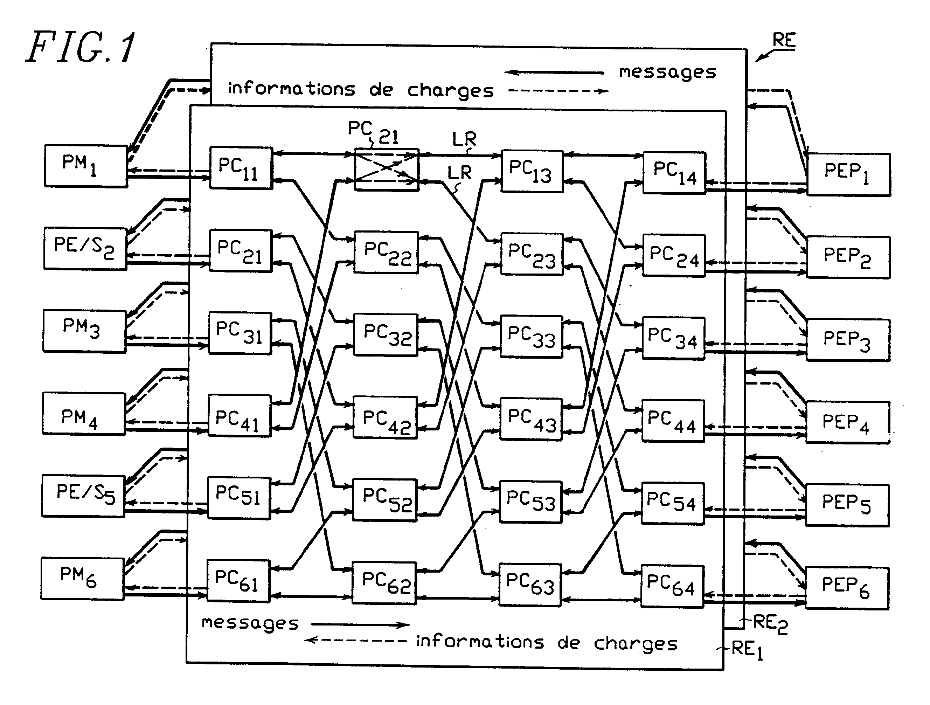

En référence à la Fig. 1, un système informatique multiprocesseurs est constitué de plusieurs types de processeurs spécialisés pour différentes tâches. Le système montré à la Fig. 1 comprend quatre processeurs de mémoire PM₁, PM₃, PM₄ et PM₆, deux processeurs d'entrée/sortie PE/S₂ eₜ PE/S₅, six processeurs d'exécution de processus PEP₁ à PEP₆, et un réseau de communication à processeurs RE.

Les processeurs de mémoire PM ont pour fonction de stocker des programmes en cours de traitement représentant, par exemple, des combinaisons de symboles d'un langage formel d'application tel que le LISP. En cours d'exécution de programmes, les informations circulent sous la forme de messages entre les processeurs de mémoire PM et les processeurs d'exécution de processus PEP à travers le réseau de communication RE.

Les processeurs d'entrée/sortie PE/S sont destinés à connecter le système informatique avec des moyens extérieurs au système, par exemple avec des terminaux de dialogue ou avec d'autres systèmes informatiques.

Les processeurs d'exécution de processus PEP exécutent sur les messages reçus en provenance des processeurs PM et PE/S des processus de traitement, par exemple de réduction symbolique. Les messages traités par les processeurs d'exécution de processus PEP sont ensuite éventuellement réacheminés vers les processeurs de mémoire PM à travers le réseau RE afin d'y être stockées ou vers des processeurs d'entrée/sortie PE/S.

Le réseau de communication RE est du type Oméga. Le réseau RE est constitué de deux sous-réseaux RE₁ et RE₂ convoyant des messages respectivement selon deux sens de transmission entre les processeurs PM et PE/S et les processeurs PEP.

Les sous-réseaux RE₁ et RE₂ comprennent chacun vingt-quatre processeurs de communication PC₁₁ à PC₆₄ spécialisés dans la commutation et le transfert des messages. Le sous-réseau RE₁ convoie des messages incluant des données à traiter dans le sens de transmission des processeurs PM et PE/S vers les processeurs PEP. Le sous-réseau RE₂ convoie des messages incluant des données traitées dans le sens de transmission des processeurs PEP vers les processeurs PM et PE/S.

Dans le sens inverse au sens de transmission des messages et sur des lignes distinctes, les sous-réseaux RE₁ et RE₂ transmettent des informations de charges de travail relatives à des charges d'exécution incombant aux processeurs PEP et des charges de mémorisation incombant aux processeurs PM. Ces informations de charges permettent au réseau RE de répartir équitablement les charges de travail entre les différents processeurs de mémoire PM et d'exécution de processus PEP.

Chaque processeur de communication PC comprend des premier et second ports d'entrée de message et des premier et second ports de sortie de message auxquels sont associés respectivement des premier et second ports de sortie de charge et des premier et second ports d'entrée de charge. Les processeurs de communication sont reliés entre eux par des liaisons de transmission LR de type asynchrone. Les transferts des messages et informations de charges à travers les liaisons LR sont exécutés selon la procédure de transmission asynchrone connue dénommée "handshaking" en terminologie anglo-saxonne. Comme montré à la Fig. 1 pour le processeur PC₂₁, un processeur de communication PC permet toutes les possibilités de connexion entre les deux ports d'entrée et les deux ports de sortie de messages. Deux messages différents peuvent être transmis simultanément par les deux ports de sortie de messages.

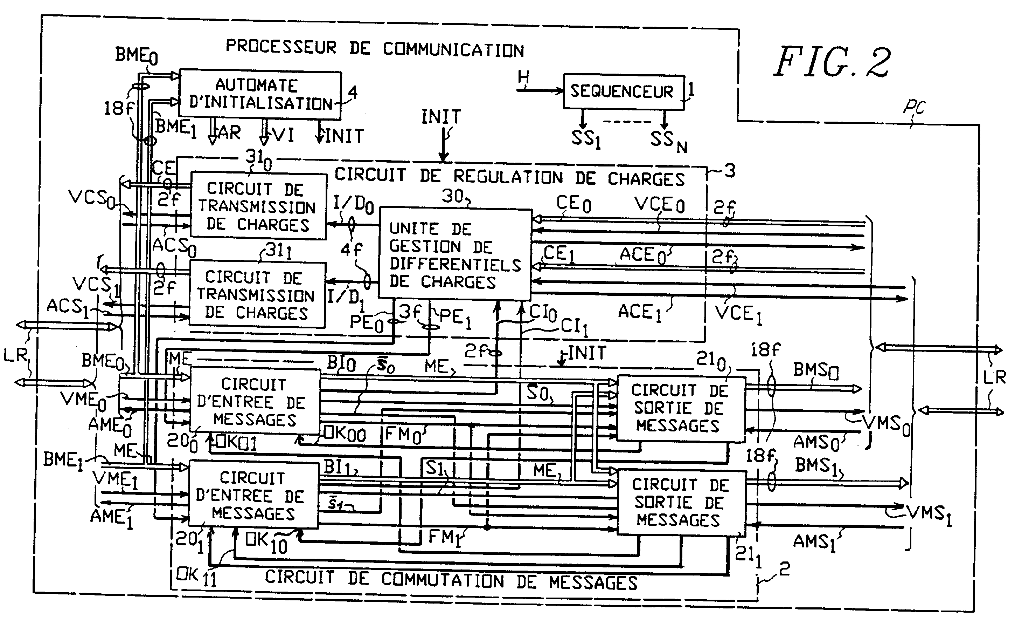

En référence à la Fig. 2, un processeur de communication PC comprend un séquenceur 1, un circuit de commutation de messages 2, un circuit de régulation de charges 3, et un automate d'initialisation 4.

Bien que les transmissions de messages et d'informations de charges entre processeurs aient lieu selon un mode asynchrone, le fonctionnement interne du processeur PC est rigoureusement synchrone et est commandé par le séquenceur 1.

Le séquenceur 1 reçoit un signal d'horloge H produit par un oscillateur local (non représenté) et établit plusieurs signaux de séquencement SS₁ à SS_{N} qui sont fournis à différents circuits du processeur PC afin de commander le fonctionnement de ces circuits, des commutations de différents signaux et des transferts de données à des instants précis déterminés dans le cycle de fonctionnement du processeur. La durée du cycle de fonctionnement du processeur PC est typiquement 120 ns.

Le circuit de commutation de messages 2 comprend deux circuits d'entrée de messages analogues 20₀ et 20₁ et deux circuits de sortie de messages analogues 21₀ et 21₁.

Les circuits d'entrée 20₀ et 20₁ sont respectivement connectés aux premier et second ports d'entrée de messages du processeur PC et reçoivent des messages ME à travers des bus de messages entrants BME₀ et BME₁ ayant typiquement 18 fils chacun. Les transferts de messages, constitués de mots ou éléments, dans les bus BME₀ et BME₁ sont gérés à l'aide de signaux de dialogue VME₀, VME₁ et AME₀, AME₁. Les signaux VME₀ et VME₁ à l'état logique "1" indiquent respectivement aux circuits d'entrée 20₀ et 20₁ que des éléments de messages ME sont valides sur les bus BME₀ et BME₁. Les signaux VME₀ et VME₁ sont fournis par des processeurs du réseau RE auxquels sont reliés les ports d'entrée de messages des circuits 20₀ et 20₁. Les signaux AME₀ et AME₁ sont produits respectivement par les circuits 20₀ et 20₁ et indiquent chacun à l'état "1" que le circuit d'entrée respectif a correctement pris en compte l'élement de message. Les signaux AME₀ et AME₁ sont fournis aux processeurs du réseau RE auxquels sont reliés les ports d'entrée de messages des circuits 20₀ et 20₁. Les signaux VME₀, VME₁ et AME₀, AME₁ correspondent respectivement aux signaux dénommés VALID" et "ACKNOWLEDGE" dans la procédure du "handshaking". Les circuits 20₀ et 20₁ reçoivent également respectivement des mots de consigne PE₀ et PE₁ de 2 bits fournis par le circuit de régulation de charges 3. Les mots PE₀ et PE₁ indiquent aux circuits d'entrée 20₀ et 20₁ les circuits de sortie 21₀ et 21₁ vers lesquels il conviendrait d'aiguiller les messages entrants ME qui n'ont pas un destinataire spécifié, pour fournir une répartition correcte des charges entre les différents processeurs. Les mots PE₀ et PE₁ sont produits par le circuit de régulation de charges 3 en fonction d'indicateurs de charges externes CE₀ et CE₁ qui sont fournis au circuit 3 par les dispositifs destinataires à travers les premier et second ports d'entrée de charges et en fonction d'indicateurs de charges internes CI₀ et CI₁ délivrés respectivement par les circuits d'entrée 20₀ et 20₁.

Les messages sont délivrés par les circuits d'entrée 20₀ et 20₁ à travers des bus internes BI₀ et BI₁ à des premiers et seconds ports d'entrée des circuits de sortie 21₀ et 21₁ respectivement.

Les circuits d'entrée 20₀ et 20₁ appliquent des signaux de sélection S₀, S̅₀ et S₁, S̅₁ à des entrées correspondantes respectivement des circuits de sortie 21₀ et 21₁. Les signaux de sélection S₀ et S̅₀ ou S₁ et S̅₁ délivrés par le circuit d'entrée 20₀ ou 20₁ sont complémentaires et sélectionnent l'un des circuits de sortie 21₀ et 21₁ afin de lui indiquer qu'un message qui lui est destiné est prêt à être transmis par le circuit d'entrée dans le bus interne correspondant BI, après accord du circuit de sortie pour la transmission du message.

L'accord pour la transmission d'un message est indiqué par les circuits de sortie 21₀ et 21₁ aux circuits d'entrée 20₀ et 20₁ au moyen de signaux d'accord OK₀₀, OK₁₀, OK₀₁ et OK₁₁. Les signaux OK₀₀ et OK₁₀ sont fournis par le circuit de sortie 21₀ respectivement aux circuits d'entrée 20₀ et 20₁. Les signaux OK₀₁ et OK₁₁ sont fournis par le circuit de sortie 21₁ respectivement aux circuits d'entrée 20₀ et 20₁. Lorsque par exemple le signal OK₀₀="1" est appliqué au circuit d'entrée 20₀ par le circuit de sortie 21₀, le circuit de sortie 21₀ signale ainsi au circuit d'entrée 20₀ qu'il est prêt pour le transfert d'un message. Précédemment, en positionnant à l'état "1" le signal S₀, le circuit d'entrée 20₀ a indiqué au circuit de sortie 21₀ qu'un message qui lui est destiné est en attente de transfert.

Les circuits d'entrée 20₀ et 20₁ fournissent également respectivement des signaux FM₀ et FM₁ aux deux circuits de sortie 21₀ et 21₁. Les signaux FM₀ et FM₁ ont pour fonction d'indiquer la fin d'un message en cours de transmission, c'est-à-dire le dernier mot transmis du message.

Les circuits de sortie 21₀ et 21₁ délivrent les messages respectivement dans des bus de messages sortants BMS₀ et BMS₁ analogues aux bus entrants BME₀ et BME₁. Des signaux de dialogue VMS₀, AMS₀, et VMS₁, AMS₁ commandent la transmission asynchrone des messages respectivement dans les bus BMS₀ et BMS₁.

Le circuit de régulation de charges 3 comprend une unité de gestion de différentiels de charges 30 et deux circuits de transmission de charges 31₀ et 31₁.

Le circuit de régulation de charges 3 a essentiellement pour fonction de commander la commutation des messages en fonction des charges du réseau et de déterminer des indicateurs de charges externes CE à transmettre vers les processeurs situés en amont du processeur PC par rapport au sens de transmission des messages. Les indicateurs de charges CE sont calculés dans le circuit 3 à partir des indicateurs de charges externes CE₀ et CE₁ transmis par les processeurs en aval et des indicateurs de charges internes CI₀ et CI₁ transmis par les circuits d'entrée 20₀ et 20₁.

L'unité de gestion de différentiels de charges 30 reçoit en entrée les indicateurs de charge CE₀ et CE₁ transmis respectivement à travers deux bus à 2 fils. Des signaux de dialogue VCE₀, ACE₀, VCE₁ et ACE₁ commandent la transmission asynchrone des indicateurs de charges CE₀ et CE₁ dans les bus. Outre les mots de consigne PE₀ et PE₁, le circuit 30 délivre deux commandes d'incrémentation/décrémentation de comptes de charges I/D₀ et I/D₁ fournies respectivement aux circuits de transmission de charges 31₀ et 31₁ à travers deux bus à 4 fils. Les commandes I/D₀ et I/D₁ commandent dans les circuits de transmission de charges 31₀ et 31₁ l'incrémentation (+1) et la décrémentation (-1) de comptes de charges de mémoire et d'exécution.

Les circuits de transmission de charges 31₀ et 31₁ sont analogues. Les indicateurs de charges CE sont transmis par les circuits 31₀ et 31₁ dans deux bus de 2 fils. Des signaux de dialogue VCS₀, ACS₀, VCS₁ et ACS₁ commandent la transmission asynchrone des indicateurs de charges CE dans les bus.

L'automate d'initialisation 4 a pour fonction de programmer adéquatement le processeur de communication PC à la mise en service du système informatique dans lequel est inclus le processeur PC et lors d'opérations ultérieures d'initialisation. L'automate est connecté aux bus BME₀ et BME₁ pour détecter des messages d'initialisation convoyés par ces bus. Lorsqu'un message d'initialisation qui lui est destiné est détecté par l'automate 4 celui-ci inhibe le fonctionnement des circuits 2 et 3 et déclenche un processus d'initialisation pour programmer le processeur PC en chargeant des registres internes des circuits 2 et 3 avec des valeurs contenues dans le message d'initialisation détecté. Ces valeurs sont fonction de la localisation du processeur PC dans le réseau de communication RE. Lorsqu'une initialisation est en cours, l'automate 4 délivre en sortie successivement plusieurs mots VI et adresses AR transmis aux registres internes à initialiser des circuits 2 et 3. Les mots VI ont des valeurs égales aux valeurs à charger dans les registres internes. Les adresses AR sélectionnent individuellement les registres internes afin d'y charger les mots VI. L'automate 4 délivre également en sortie un signal d'initialisation INIT qui est fourni aux circuits 2 et 3. Le signal INIT est à l'état "1" pendant l'initialisation du processeur PC et inhibe le fonctionnement des circuits 2 et 3. A la fin de l'initialisation, le signal INIT commute à l'état "0" pour autoriser le fonctionnement des circuits 2 et 3.

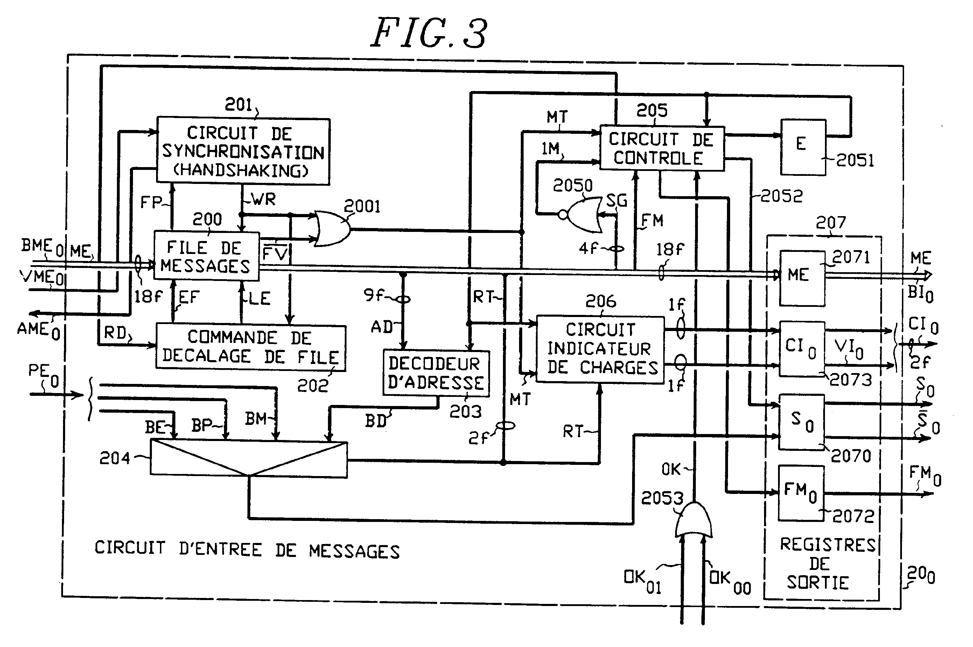

En référence à la Fig. 3, le circuit d'entrée de messages 20₀ comprend essentiellement une file de messages 200, un circuit de synchronisation 201, un circuit de commande de décalage de file 202, un décodeur d'adresse 203, un multiplexeur 204, un circuit de contrôle 205, un circuit indicateur de charges 206, et un ensemble de registres de sortie 207.

La file de messages 200 est une file du type FIFO. La file 200 est constituée de cellules de mémoire de 18 bits et reçoit mot par mot les messages ME à stocker temporairement. La présence en entrée de la file 200 d'un message à charger est détectée par le circuit de synchronisation 201.

Le circuit de synchronisation 201 gère la transmission des messages dans le bus BME₀ selon la procédure du handshaking en synchronisant l'émetteur et le récepteur à chaque élément, ou mot, de message. Le circuit 201 reçoit le signal de dialogue VME₀. La file 200 fournit au circuit de synchronisation 201 un signal FP indiquant à l'état "1" que la file 200 est pleine. Les états des signaux VME₀ et FP sont lus périodiquement à fréquence élevée par le circuit 201. Lorsque le circuit 201 détecte la combinaison d'états (VME₀, FP)=(1,0), un élément de message est en attente dans le bus BME₀ et peut être chargé dans la file 200. Le circuit 201 positionne alors le signal AME₀ à l'état "1" pour acquitter le transfert de l'élément de message. Parallèlement, le circuit 201 positionne également à l'état "1" un signal de commande d'écriture de file WR. Le signal WR est délivré par le circuit 201 à une entrée de commande d'écriture de la file 200 et autorise l'écriture de l'élément de message dans la file 200. Afin d'éviter des effets et comportements aberrants dûs par exemple à l'apparition d'un état métastable dans le circuit de synchronisation 201, le circuit 201 comprend de préférence deux bascules en cascade pour échantillonner et lire le signal de dialogue asynchrone VME₀.

Le signal WR est également appliqué à une première entrée d'une porte OU à deux entrées 2001 et à une entrée du circuit de commande de décalage de file 202. Une seconde entrée de la porte 2001 reçoit un signal F̅V̅ délivré par la file de messages 200. Le signal F̅V̅ à l'état "0" indique que la file 200 est vide et ne contient aucun message.

Le circuit de commande de décalage de file 202 commande des opérations de décalage de pointeurs dans la file 200 afin de permettre les écritures et lectures mot par mot des messages dans la file 200. La commutation du signal WR à l'état "1" indique au circuit 202 qu'un mot de message est à écrire dans la file 200. Le circuit 202 commande la mémorisation du mot et le décalage d'un pointeur d'écriture EC.

Un signal de commande de lecture RD est fourni au circuit de commande de décalage 202 par le circuit de contrôle 205. La commutation du signal RD à l'état "1" indique au circuit 202 qu'une lecture d'un mot de message dans la file 200 est demandée par le circuit de contrôle 205. Le circuit 202 commande alors le décalage d'un pointeur de lecture LE pour délivrer en sortie le mot suivant.

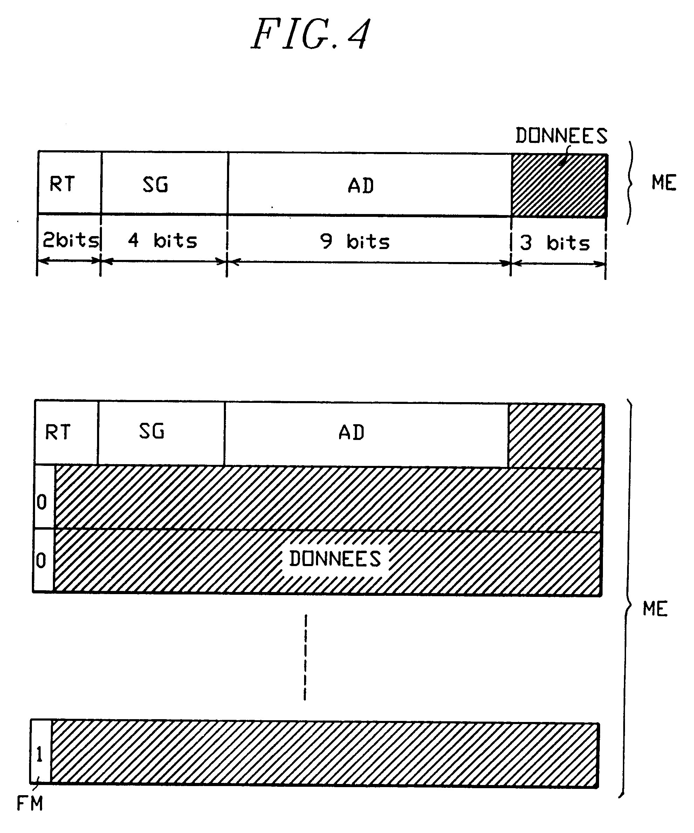

En référence à la Fig. 4, un message ME a une longueur variable et est composé d'un ou plusieurs mots de 18 bits. Le premier mot d'un message se subdivise en un bloc d'adresse et de signalisation et en un bloc de données. Le bloc d'adresse et de signalisation est placé en en-tête du message et comprend un code de routage RT, un code de signalisation SG, et une adresse AD.

Le code de routage RT est composé de deux bits et indique au processeur PC le traitement de routage à appliquer au message.

Le code de signalisation SG comprend quatre bits et signale notamment au processeur PC si le message est composé d'un ou de plusieurs mots. Dans le cas où le message est composé d'un seul mot, le code SG a la valeur "0000". Dans l'autre cas où le message est composé de plusieurs mots, le code SG a une valeur différente de "0000".

L'adresse AD est l'adresse d'un processeur destinataire du message, et est composée de 9 bits.

Le code de routage RT prend différentes valeurs "00", "01", "10" et "11". Le code RT="00" indique au processeur PC que le message est destiné spécifiquement au processeur indiqué par l'adresse AD et correspond à un routage dépendant d'adresse. Le code RT="01" indique au processeur PC que le message est à traiter en fonction des charges de mémoire et est à aiguiller vers un processeur de mémoire PM. Le code RT="10" indique que le message est à traiter en fonction des charges d'exécution et est à aiguiller vers un processeur d'exécution de processus PEP. Le code RT="11" signale au processeur PC la nécessité d'un routage exceptionnel exigé dans certaines circonstances, par exemple en cas de défaillance d'un processeur de communication PC du réseau RE. Dans le cas des routages dépendant de charge mémoire et de charge d'exécution, et d'un routage exceptionnel, l'adresse AD n'est pas significative et n'est pas prise en compte par le processeur PC.

Lorsque le message ME est composé de plusieurs mots, le bit de poids le plus fort des mots suivant le premier mot de message est un bit de signalisation FM. Le bit FM signale à l'état "0" que le mot correspondant n'est pas le dernier mot du message, et à l'état "1" que ledit mot est le dernier mot du message.

En référence à nouveau à la Fig. 3, le décodeur d'adresse 203 reçoit l'adresse AD contenue dans le premier mot du message ME et délivre en sortie un bit BD aux états "0" et "1" respectivement lorsque le message est à commuter vers les circuits de sortie 21₀ et 21₁.

Le décodeur d'adresse 203 comprend des masques de décodage pour isoler dans l'adresse AD des bits qui le concernent ainsi que des bits relatifs à un numéro de module par exemple lorsque le système multiprocesseur est composé de plusieurs réseaux de communication modulaires interconnectés. Un mot de profil et un bit de routage sont également mémorisés dans d'autres registres internes du décodeur 203 afin respectivement de comparer les bits d'adresse correspondants et un profil donné de manière à déterminer le circuit de sortie vers lequel le message est à aiguiller, et à spécifier néanmoins un circuit de sortie en cas d'éventuelle divergence dans le décodage.

Le code de routage RT est appliqué à des entrées de commande du multiplexeur 204 et à des entrées du circuit indicateur de charges 206.

Le multiplexeur 204 comprend quatre entrées de données. Une première entrée reçoit le bit BD délivré par le décodeur d'adresse 203. Des seconde et troisième entrées reçoivent respectivement des premier BM et second BP bits du mot de consigne PE₀ fourni par le circuit de régulation de charges 3. La quatrième entrée reçoit un bit BE qui indique le bon fonctionnement du processeur situé en aval et qui est fourni par l'automate 4. Les bits BD, BM, BP et BE du mot PE₀ sont sélectionnés respectivement par les valeurs "00", "01", "10" et "11" du code de routage RT. De même que le bit BD, les bits BM, BP et BE prennent les états "0" et "1" respectivement lorsque le message ME est à commuter vers les circuits de sortie 21₀ et 21₁. Le multiplexeur 204 fournit un bit de sélection de circuit de sortie S₀ ayant le même état logique que le bit BD, BM, BP ou BE sélectionné en entrée. Un registre 2070 de l'ensemble de registres 207 reçoit le bit de sélection S₀ afin de le mémoriser. Le registre 2070 fournit par des sorties complémentaires les signaux de sélection S₀ et S̅₀ destinés respectivement aux circuits de sortie 21₀ et 21₁.

Le circuit de contrôle 205 a pour fonction de contrôler le fonctionnement de l'ensemble du circuit d'entrée.

Un signal MT=F̅V̅+WR produit par la porte OU 2001 est fourni au circuit 205 afin de l'informer par un état "1" qu'un ou des éléments de messages sont chargés dans la file 200 et sont en attente d'être traités.

Le circuit de contrôle 205 commande la lecture d'un message dans la file 200 en fournissant le signal RD="1" au circuit de commande de décalage de file 202.

Chacun des mots d'un message ME en cours de lecture est stocké temporairement dans un registre tampon 2071 de l'ensemble de registres de sortie 207 avant d'être transmis dans le bus BI₀. A la lecture du premier mot du message dans la file 200, le circuit de contrôle 205 reçoit un signal 1M lui apportant une information sur la longueur du message. Le signal 1M est produit par une porte NON-OU à quatre entrées 2050 recevant le code de signalisation SG inclus dans le premier mot du message. Le signal 1M est aux états "1" et "0" respectivement lorsque le code SG a une valeur égale à "0000" et différente de "0000". Dans le cas où le signal 1M="1", le circuit de contrôle 205 est informé que le message est constitué d'un unique mot et il délivre consécutivement un bit de fin de message FM₀ à l'état "1". Le bit FM₀ est chargé dans un registre 2072 de l'ensemble de registres de sortie 207 afin de produire le signal de fin de message FM₀ destiné aux circuits de sortie 21₀ et 21₁. Dans le cas où le signal 1M="0", le circuit 205 est informé que le message comprend plusieurs mots. Le circuit 205 comprend une entrée reliée à une sortie d'un port de sortie de données de la file 200 pour détecter le bit FM inclus dans les mots du message suivant le premier mot. Lorsque le bit FM="1" indiquant la transmission du dernier mot du message est lu par le circuit de contrôle 205, celui-ci charge dans le registre 2072 le bit de fin de message FM₀=1.

Un registre d'état 2051 est associé au circuit de contrôle 205 et mémorise un bit E indiquant l'état de fonctionnement du circuit d'entrée.

Le circuit de contrôle 205 écrit le bit E à l'état "0" lorsqu'aucun message n'est en cours de traitement et lors du traitement du premier mot d'un message.

Le bit E écrit dans le registre 2051 est fourni en retour au circuit de contrôle 205, et est également appliqué à des entrées du décodeur d'adresse 203 et du circuit indicateur de charges 206. Lorsque le bit E est à l'état "0", il autorise le fonctionnement du décodeur d'adresse 203 et du circuit indicateur de charges 206 lors du traitement du premier mot du message, ainsi que l'écriture du bit S₀ dans le registre 2070 et la détection de la fin éventuelle du message sur le premier mot transmis, 1M="1". Afin de commander l'écriture du bit S₀ dans le registre 2070, une sortie du circuit 205 est reliée à une entrée de commande de chargement du registre 2070 par une liaison 2052.

Le bit E est écrit à l'état "1" par le circuit de contrôle 205 dès la lecture du second mot du message. Lorsque le bit E est à l'état "1", le fonctionnement du décodeur d'adresse 203 et du circuit d'indicateur de charges 206 est inhibé et l'écriture dans le registre 2070 n'est plus autorisée. Le bit E="1" indique que les mots suivant le premier mot d'un message de plusieurs mots sont en cours de lecture. Lorsque le bit de fin de message FM="1" est détecté par le circuit 205, la lecture du message de plusieurs mots est terminée. Le circuit 205 délivre le bit de fin de message FM₀="1" et le bit E est écrit à l'état "0".

Après que le premier mot d'un message a été lu dans la file 200 et enregistré temporairement dans le registre tampon 2071, le transfert de ce premier mot dans le bus BI₀ ainsi que la lecture et le transfert des mots suivants du message ne sont commandés par le circuit 205 qu'après la réception d'un signal d'accord OK=OK₀₀+OK₀₁="1" produit par une porte OU à deux entrées 2053 à partir des deux signaux d'accord OK₀₀ et OK₀ transmis par les circuits de sortie 21₀ et 21₁.

Outre le code de routage RT et le bit d'état E, le circuit indicateur de charges 206 reçoit également en entrée le signal MT=WR+F̅V̅ produit par la porte 2001. A partir de ces différents signaux reçus en entrée, le circuit 206 produit l'indicateur de charges interne CI₀.

L'indicateur de charges CI₀ est un mot de 2 bits. Le premier bit VI₀ de l'indicateur valide à l'état "1" les informations portées par le second bit. Le second bit de l'indicateur signale un message sans adresse, RT="01" ou RT="10", commuté vers un processeur de mémoire PM ou un processeur d'exécution de processus PEP. Lorsque RT="01", le second bit est à l'état "0" ; lorsque RT="10", le second bit vaut "1". L'indicateur CI₀ est transmis au circuit de régulation de charges 3 à travers un registre 2073 de l'ensemble de registres de sortie 207.

Les indicateurs de charges CI₀ et CI₁ permettent au circuit de régulation de charges 3 d'anticiper l'effet du passage d'un message sans adresse sur la répartition des charges de mémoire et d'exécution entre les processeurs. Le mécanisme d'anticipation sur le calcul des charges mis en oeuvre par le circuit de régulation de charges 3 est précisé par la suite. Ce mécanisme permet de minimiser les erreurs sur l'estimation de la répartition des charges entre les processeurs, erreurs qui sont dues principalement aux temps de propagation des informations de charges dans le réseau RE.

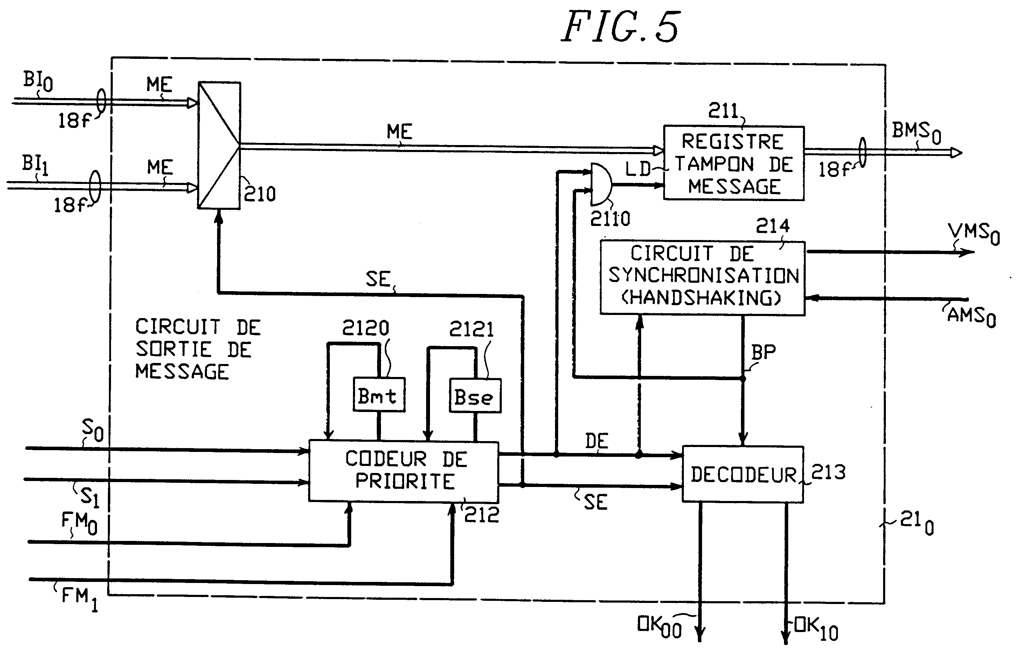

En référence à la Fig. 5, le circuit de sortie de messages 21₀ comprend essentiellement un multiplexeur 21₀, un registre tampon de message 211, un codeur de priorité 212, un décodeur 213, et un circuit de synchronisation 214.

Le multiplexeur 210 comprend des premier et second ports d'entrée reliés respectivement aux bus BI₀ et BI₁ pour recevoir les messages ME transmis par les circuits d'entrée 20₀ et 20₁. Un signal SE délivré par le codeur de priorité 212 est appliqué à une entrée de sélection de port du multiplexeur 210.

Le signal SE indique le circuit d'entrée 20₀ ou 20₁ qui est autorisé à transmettre un message par le codeur de priorité 212. Les états "0" et "1" du signal SE sélectionnent respectivement les premier et second ports d'entrée du multiplexeur 210. Un port de sortie du multiplexeur 210 est relié au bus de sortie de messages BMS₀ à travers un registre tampon 211.

Le codeur de priorité a pour fonction essentiellement d'arbitrer les conflits d'accès entre les circuits d'entrée 20₀ et 20₁ lorsque ceux-ci effectuent simultanément des demandes de transfert de message.

Le codeur de priorité 212 reçoit les signaux S₀, S₁, FM₀ et FM₁ délivrés par les circuits de sortie 21₀ et 21₁ et fournit le signal SE et un signal DE. A l'état "1", le signal DE indique que l'un au moins des signaux S₀ et S₁ est à l'état "1" et donc qu'au moins une demande de transmission de message est effectuée par les circuits d'entrée 20₀ et 20₁.

Deux registres d'état 2120 et 2121 sont associés au codeur de priorité 212. Les registres d'état 2120 et 2121 mémorisent respectivement des bits d'état Bmt et Bse écrits et lus par le codeur 212. Le bit d'état Bmt indique à l'état "1" qu'un message est en cours de traitement, c'est-à-dire en cours de transfert vers le bus BMS₀ à travers le circuit de sortie 21₀. L'état "1" du bit Bmt interdit tout changement d'état du codeur de priorité 212 et des signaux SE et DE avant la détection du signal de fin de message correspondant FM₀ ou FM₁. Le bit Bse mémorise la provenance du message pendant toute la durée du transfert. Les états "0" et "1" du bit Bse signalent respectivement des messages provenant des circuits d'entrée 20₀ et 20₁.

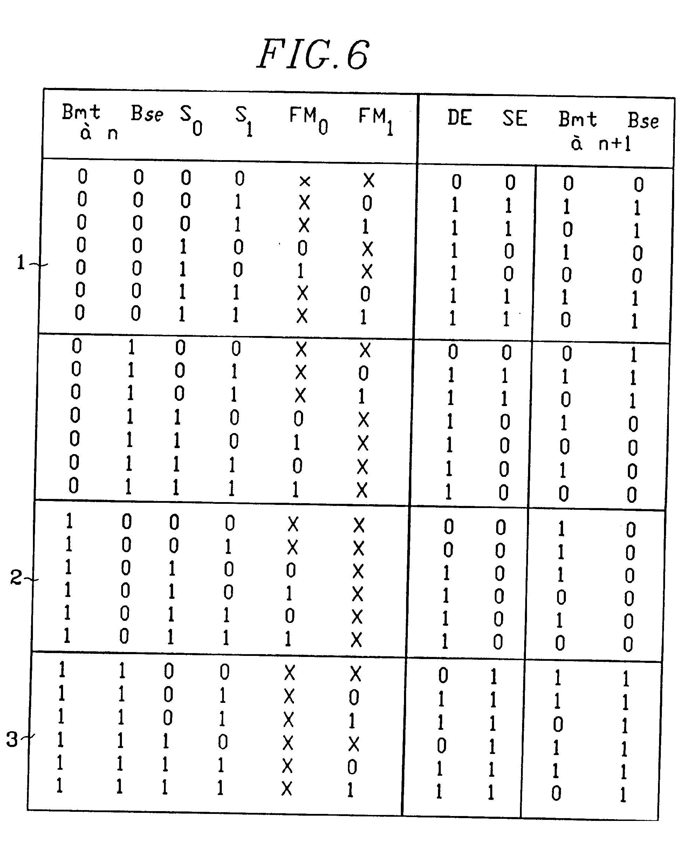

Pour plus de précisions sur le fonctionnement du codeur de priorité 212, le lecteur se reportera à la table de vérité montrée à la Fig. 6. Cette table indique les états des signaux de sortie SE et DE en fonction des différents états possibles des signaux d'entrée S₀, S₁, FM₀ et FM₁ ainsi que des bits d'état Bmt et Bse. Les signaux d'entrée S₀, S₁, FM₀ et FM₁, ainsi que les bits Bmt et Bse à un état initial n sont montrés dans la partie gauche de la table de vérité. Les signaux de sortie DE et SE, ainsi que les bits Bmt et Bse après commutation à un état suivant n+1 sont montrés dans la partie droite de la table de vérité. Horizontalement, la table de vérité se divise en trois cadres 1, 2 et 3. Le cadre 1 concerne le fonctionnement du codeur de priorité 212 lorsque des demandes de transfert de message interviennent et qu'aucun transfert de message n'est déjà en cours. Dans les parties supérieure et inférieure du cadre 1, les circuits d'entrée 20₀ et 20₁ sont considérés comme prioritaires. Les cadres 2 et 3 de la table de vérité concernent le fonctionnement du codeur de priorité lorsque respectivement les circuits d'entrée 20₀ et 20₁ sont en cours de transfert d'un message.

En référence à nouveau à la Fig. 5, le décodeur 213 est un circuit logique qui produit les signaux d'accord OK₀₀ et OK₁₀ à partir des signaux SE et DE délivrés par le codeur de priorité 212 et d'un signal BP délivré par le circuit de synchronisation 214. Le signal BP signale à l'état "1" que le bus de sortie de messages BMS₀ est disponible pour le transfert d'un message. Les signaux DE et BP à l'état "1" autorisent l'activation des signaux OK₀₀ et OK₁₀. Le signal SE détermine celui des deux signaux OK₀₀ et OK₁₀ qu'il convient d'activer.

Le circuit de synchronisation 214 est un circuit complémentaire au circuit de synchronisation 201 inclus dans un circuit d'entrée et décrit en référence à la Fig. 3. Le signal DE est fourni au circuit 214 pour le tenir informé des demandes de transfert de message en provenance des circuits d'entrée. Lorsque le bus de sortie BMS₀ est libre, c'est-à-dire lorsque l'élément de message précédent a été acquitté, le circuit de synchronisation 214 met sur le bus l'élément à transmettre et active le signal de dialogue VMS₀ à l'état "1". En réponse, le processeur situé en aval positionne le signal de dialogue AMS₀ à l'état "1" signalant ainsi que l'élément de message a été acquis. Consécutivement le signal BP vient à l'état "1". Le circuit de synchronisation 214 positionne alors VMS₀ à l'état "0" pour signaler qu'il a bien reçu l'accusé de réception et, en réponse, le processeur situé en aval met le signal AMS₀ à l'état "0". Le bus est alors, de nouveau, libre pour assurer la transmission d'un autre élément de message.

Une porte ET à deux entrées 2110 est également prévue dans le circuit de sortie 21₀ afin de produire à partir des signaux SE et DE un signal LD qui est appliqué à une entrée de commande de chargement du registre tampon 211. Le signal LD autorise à l'état "1" l'écriture des mots de message dans le registre tampon 211 et ainsi permet leur transfert dans le bus BMS₀ au fur et à mesure de leur transmission par le multiplexeur 210.

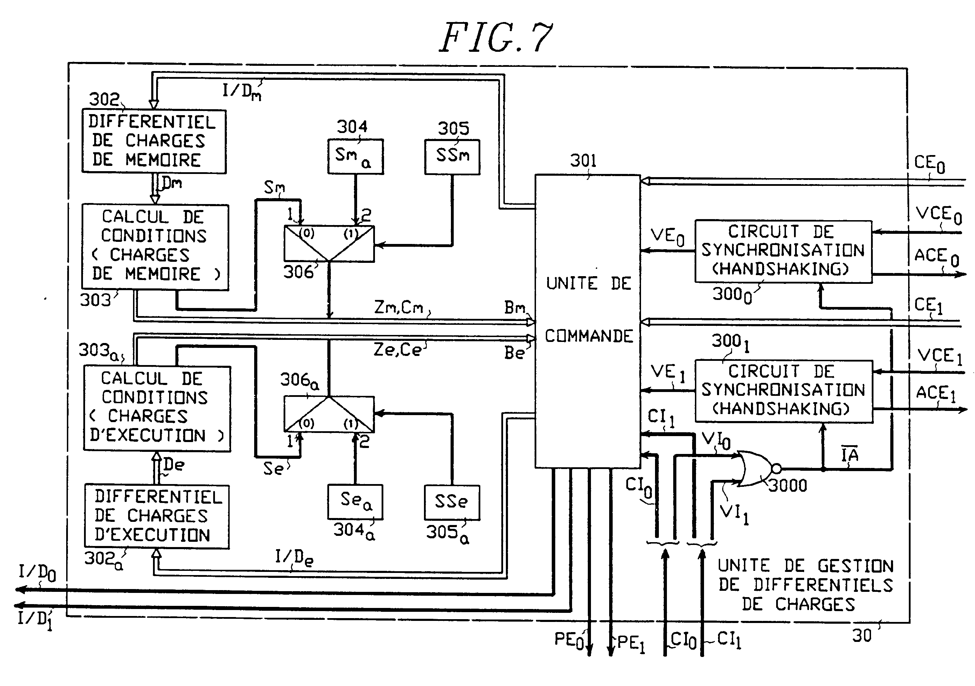

En référence à la Fig. 7, l'unité de gestion de différentiels de charges 30 comprend essentiellement deux circuits de synchronisation 300₀ et 300₁, une unité de commande 301, un compteur-décompteur 302 et un circuit de calcul de conditions de différentiels de charges de mémoire 303, et un compteur-décompteur 302ₐ et un circuit de calcul de conditions de différentiels de charges d'exécution 303ₐ.

Les circuits de synchronisation 300₀ et 300₁ sont analogues au circuit de synchronisation 201 inclus dans un circuit d'entrée et décrit en référence à la Fig. 3. Les circuits de synchronisation 300₀ et 300₁ contrôlent la transmission des indicateurs de charges externes CE₀ et CE₁ à travers les premier et second ports d'entrée de charges respectivement à l'aide des signaux de dialogue VCE₀, ACE₀ et VCE₁, ACE₁. Des signaux de validation VE₀ et VE₁ respectivement pour les indicateurs de charges CE₀ et CE₁ sont délivrés à l'unité de commande 301 par les circuits de synchronisation 300₀ et 300₁.

Chacun des indicateurs de charges externes CE₀ et CE₁ est, par exemple, constitués de mots signés de deux bits. Un premier bit de l'indicateur précise sa nature, c'est-à-dire indicateur de charges de mémoire ou indicateur de charges d'exécution. Le second bit est utilisé pour coder un incrément élémentaire de charge +1 ou un décrément élémentaire de charge -1.

Schématiquement la charge mémoire d'un port de sortie correspond au taux d'occupation de la mémoire vue par ce port, le taux d'occupation étant défini comme le quotient du nombre de cellules de la mémoire utilisées par le nombre total de cellules disponibles.

Plus précisément, pour les processeurs de communication PC du réseau qui voient par exemple, par l'intermédiaire des processeurs situés en aval, plusieurs processeurs de mémoire PM, la charge mémoire correspond au taux d'occupation minimale des processeurs de mémoires accessibles par ce port. De même, la charge d'exécution d'un port de sortie correspond au taux d'occupation minimal des processeurs d'exécution accessibles par ce port.

La valeur du différentiel de charge permet d'identifier le port de sortie à utiliser pour pouvoir atteindre l'unité la moins chargée à un instant donné.

Les messages conduisant à une occupation supplémentaire des processeurs de mémoire (RT="01") ou des processeurs d'exécution (RT="10") doivent être dirigés vers la sortie de charge minimale. Ceci implique qu'une variation de charge reçue par un processeur de communication n'est transmise aux processeurs amont que si cette variation de charge affecte le port de sortie de charge minimale.

L'unité 301 traite en priorité les indicateurs de charges internes CI₀ et CI₁ reçus également en entrée. Ainsi lorsque l'un au moins des signaux de validation VI₀ et VI₁ correspondant aux indicateurs de charge internes CI₀ et CI₁ est actif, une porte NON-OU à deux entrées 3000 délivre un signal d'inhibition I̅A̅ à l'état "0". Le signal I̅A̅ est appliqué à des entrées correspondantes des circuits 300₀ et 300₁ et interdit à l'état "0" l'activation des signaux de dialogue ACE₀ et ACE₁ autorisant la transmission des indicateurs de charges externes CE₀ et CE₁.

Les valeurs des indicateurs de charges externes CE₀ et CE₁ sont notées conventionnellement (+1)ₘ, (-1)ₘ, (+1)ₑ et (-1)ₑ. L'incrément (+1) et le décrément (-1) précisent les valeurs et signes des variations de charges. Les indices m et e indiquent que les variations signalées concernent respectivement la charge de mémoire et la charge d'exécution.

A partir des indicateurs de charges CE₀, CE₁, CI₀ et CI₁, l'unité de commande 301 détermine des commandes d'incrémentation/décrémentation I/Dₘ et I/Dₑ à appliquer respectivement aux compteurs-décompteurs 302 et 302a ainsi que les commandes d'incrémentation/décrémentation I/D₀ et I/D₁ à transmettre aux circuits de transmission de charges 31₀ et 31₁. Dans le cas de variation de charge externe, les commandes I/D₀ et I/D₁, transmises simultanément aux circuits 31₀ et 31₁, ne sont produites que si la variation de charge détectée affecte le port de sortie de charge minimale.

Les compteurs-décompteurs 302 et 302a mémorisent respectivement des différentiels de charges de mémoire Dm=CHm₀-CHm₁ et d'exécution De=CHe₀-CHe₁, où CHm₀, CHm₁ et CHe₀, CHe₁ représentent respectivement les charges de mémoire et d'exécution correspondant aux premier et second ports de sortie de messages. Les différentiels de charges Dm et De sont appliqués à des ports d'entrée respectivement des circuits de calcul de conditions 303 et 303a. Après une initialisation du processeur PC par l'automate d'initialisation 4, les différentiels de charges Dm et De ont des valeurs initiales égales à zéro déterminées par le message d'initialisation.

Le signe d'un différentiel de charges indique à l'unité 301 le port de sortie de messages de moindre charge pour le type de charge correspondant. Un signe positif correspondant à un différentiel de charges indique que le port de sortie de messages de moindre charge est le second port. Un signe négatif correspondant à un différentiel de charges indique que le port de sortie de messages de moindre charge est le premier port. De manière générale un message est dirigé vers le port de sortie de messages de moindre charge correspondante. Ainsi en dirigeant, par exemple, un message destiné à un processeur de mémoire PM vers le port de sortie de messages affecté de la charge de mémoire la plus faible, la probabilité est grande que ledit message atteigne l'un des processeurs de mémoire les moins chargés.

A la réception, par exemple, des indicateurs de charges externes CE₀=(+1)ₘ et CE₀=(-1)ₘ, l'unité 301 délivre des commandes I/Dₘ ayant respectivement des valeurs +1 et -1 de manière à incrémenter et décrémenter le différentiel de charges de mémoire Dm. A la réception des indicateurs de charges CE₁=(+1)ₘ et CE₁=(-1)ₘ, l'unité 301 délivre des commandes I/Dₘ ayant respectivement les valeurs -1 et +1 de manière à décrémenter et incrémenter le différentiel Dm. L'incrémentation et la décrémentation du différentiel de charges d'exécution De en fonction des indicateurs de charges CE₀=(+1)ₑ, CE₀(-1)ₑ, CE₁=(+1)ₑ, et CE₁=(-1)ₑ sont réalisés par l'unité 301 au moyen de la commande correspondante I/Dₑ de manière analogue à celle décrite ci-dessus pour le différentiel de charges de mémoire Dm, en fonction des indicateurs de charges externes correspondants.

L'unité de commande 301 utilise les indicateurs de charges internes CI₀ et CI₁ pour mettre en oeuvre un mécanisme de prévision de l'évolution des différentiels de charges Dm et Ce. En effet, lorsque par exemple un indicateur de charges CI₁=(+1,0)ₘ est reçu par l'unité 301 et signale un message routé sur charge de mémoire ME reçu par le second circuit d'entrée 20₁ et commuté vers le premier circuit de sortie 21₀, le passage de ce message ME à travers le premier port de sortie de messages est susceptible avec une forte probabilité d'accroître la charge de mémoire du premier port de sortie de messages. L'unité 301 commande alors immédiatement une variation I/Dₘ=+1 du différentiel de charges correspondant Dm. Toutefois cette augmentation de charge du premier port de sortie ne doit être transmise aux processeurs situés en amont que si ce port reste de charge minimum à l'issue de l'augmentation de charge. La prévision de l'évolution des différentiels de charge, ou anticipation, a déja été effectuée par tous les processeurs de communication en amont du circuit d'entrée 20₁ (dans lequel le message est déjà passé). Si le circuit de sortie choisi 21₀ conserve son statut de sortie de charge minimale, l'unité de commande 301 transmet la commande correspondante I/D₀=(+1)ₘ vers le circuit de transmission de charges 31₀ afin que celui-ci signale l'augmentation de charge au processeur en amont connecté au premier port d'entrée de messages et n'ayant pas transmis le message ME et où par conséquent l'anticipation n'a pas été effectuée.

Si le circuit de sortie choisi 21₀ ne conserve pas un statut de sortie de charge minimale, c'est-à-dire si, en pratique, les circuits 21₀ et 21₁ avaient la même charge, l'anticipation effectuée par les processeurs de communication disposés en amont de l'entrée 20₁ était erronée, l'unité 301 commande au circuit 31₁ la transmission d'une commande I/D₁=(-1)ₘ afin d'annuler les effets des anticipations antérieures. Quant à la variation du différentiel elle peut être infirmée ultérieurement par les processeurs de communication situés en aval.

L'unité de commande 301 est capable de traiter simultanément deux indicateurs de charges de même nature, soit CE₀ et CE₁ ou CI₀ et CI₁, et de ce fait les commandes I/Dₘ et I/Dₑ peuvent également prendre les valeurs +2 et -2.

Selon une première réalisation, les circuits de calcul de conditions 303 et 303ₐ comprennent chacun simplement un détecteur de signe et un détecteur de zéro. Ces circuits 303 et 303ₐ délivrent alors des bits de signe Sm et Se et des bits de signalisation de valeur nulle Zm et Ze correspondant respectivement aux différentiels de charges Dm et De. Les bits de signe Sm et Se sont transmis à l'unité de commande 301 respectivement à travers des multiplexeurs 306 et 306a et des bus Bm et Be. La fonction des multiplexeurs 306 et 306ₐ apparaîtra plus clairement par la suite dans la description. Les bits Zm et Ze sont fournis directement à l'unité de commande 301 à travers les bus Bm et Be. Les bits de signe Sm et Se à l'état "0" indiquent à l'unité de commande 301 que les différentiels correspondants Dm et De ont des valeurs positives. A l'état "1", les bits de signe Sm et Se indiquent que les différentiels correspondants Dm et De ont des valeurs négatives. Les bits Zm et Ze à l'état "1" indiquent que les différentiels correspondants Dm et De ont des valeurs nulles.

L'unité de commande 301 détermine à partir des bits Sm, Se, Zm et Ze les valeurs à attribuer aux bits BM et BP des mots de consigne PE₀ et PE₁ fournis aux circuits d'entrée 20₀ et 20₁, ainsi qu'aux commandes d'incrémentation/décrémentation I/D₀ et I/D₁ fournies aux circuits de transmission de charges 31₀ et 31₁.

Il est maintenant considéré, par exemple, un routage sur charge de mémoire.

Lorsque le bit Zm est à l'état "0", l'unité 301 détermine le port de sortie de messages ayant une charge minimale à partir du bit Sm. Dans le cas où le bit Sm="0" indique un différentiel Dm positif, le port de sortie de charge minimale est le second port et l'unité 301 affecte alors aux bits BM des mots PE₀ et PE₁ un état "1" indiquant aux circuits d'entrée 20₀ et 20₁ que les messages entrants à router sur charge de mémoire doivent être transmis au second circuit de sortie 21₁. Dans le cas inverse où le bit Sm="1" indique un différentiel Dm négatif, le port de sortie de message de charge minimale est le premier port et l'unité 301 affecte aux bits BM des mots PE₀ et PE₁ un état "0" indiquant aux circuits d'entrée 20₀ et 20₁ que les messages doivent être transmis vers le premier circuit de sortie 21₀.

Lorsque le bit Zm est à l'état "1", les premier et second ports de sortie de messages ont des charges de mémoire équivalentes et l'unité 301 affecte aux bits BM des mots PE₀ et PE₁ des états complémentaires, par exemple un état "0" est affecté au bit BM du mot PE₀ et un état "1" est affecté au bit BM du mot PE₁.

Dans un routage sur charge d'exécution, l'unité 301 positionne les bits BP des mots PE₀ et PE₁ en fonction des bits Ze et Se de manière analogue au positionnement décrit ci-dessus des bits BM en fonction des bits Zm et Sm.

Selon une seconde réalisation permettant un traitement accéléré des charges, les circuits de calcul de conditions 303 et 303ₐ déterminent respectivement une pluralité de conditions de charge de mémoire Cm et de conditions de charge d'exécution Ce destinées à être fournies à l'unité de commande 301. Les circuits 303 et 303ₐ calculent chacun typiquement une vingtaine de conditions relatives aux différentiels de charges Dm ou De correspondants, notamment, par exemple, des conditions relatives aux signes et à des passages à zéro ou à d'autres valeurs significatives (+1, -1) du différentiel de charges et de ses dérivés. Ces types de conditions sont classiques en matière de commande optimale de processus ; elles sont connues de l'homme du métier et ne seront donc pas détaillées.

Les conditions Cm et Ce permettent à l'unité de commande 301 d'anticiper l'évolution des consignes de commutation à partir de la valeur des différentiels de charge avant leur évolution, qui demande un certain temps, et donc de réduire le temps de réaction du mécanisme par rapport au seul mécanisme décrit précédémment.

L'unité de gestion de différentiels de charges 30 comprend également le multiplexeur 306 et deux registres 304 et 305 associés au circuit de calcul de conditions 303, ainsi que le multiplexeur 306ₐ et deux autres registres 304ₐ et 305ₐ associés au circuit de calcul de conditions 303ₐ.

Les registres 304, 304ₐ, 305 et 305ₐ sont des registres de 1 bit chacun. Ces registres sont écrits à des états déterminés "0" et "1" lors de l'initialisation du processeur de communication PC en fonction de la localisation du processeur dans le réseau de communication RE. Les registres 304 et 304ₐ mémorisent respectivement des bits de signe Smₐ et Seₐ affectés aux différentiels de charges de mémoire Dm et d'exécution De dans le cas où le processeur PC comprend au moins un port de sortie de messages assurant des transferts de messages vers un seul type de processeur destinataire, processeur de mémoire PM ou processeur d'exécution de processus PEP. Les registres 305 et 305a mémorisent respectivement des bits de sélection de signes SSm et SSe correspondant aux différentiels de charges Dm et De.

Les multiplexeurs 306 et 306ₐ ont pour fonction de sélectionner, parmi les bits de signe Sm, Se, Smₐ et Seₐ, les deux bits à fournir à l'unité 301, cette sélection étant dépendante des états des bits de sélection SSm et SSe. Les bits de signe Sm et Se sont appliqués à des premières entrées de données 1 respectivement des multiplexeurs 306 et 306ₐ. Les bits de signe Smₐ et Seₐ sont appliqués à des secondes entrées de données 2 respectivement des multiplexeurs 306 et 306ₐ. Les bits SSm et SSe sont appliqués à des entrées de sélection respectivement des multiplexeurs 306 et 306ₐ.

Lorsqu'un port de sortie de messages du processeur PC, par exemple le premier port, est connecté, par exemple, à un processeur de mémoire PM, le premier port de sortie de messages du processeur PC ne doit en aucun cas être sélectionné pour transmettre un message sans adresse destiné à un processeur d'exécution de processus PEP. La solution mise en oeuvre pour éviter une telle sélection est d'attribuer au différentiel correspondant, Dm dans cet exemple, un signe positif ou négatif tel que ledit premier port de sortie de messages apparaisse dans tous les cas à l'unité 301 comme ayant une charge d'exécution supérieure à la charge d'exécution du second port de sortie de messages.

Les bits de sélection SSm et SSe à l'état "1" indiquent respectivement que les premier et second ports de sortie de messages du processeur PC sont reliés à des processeurs PM et PEP et commandent la sélection respectivement des bits de signe Smₐ et Smₑ. Les bits Smₐ et Smₑ indiquent à l'unité 301 les signes affectés aux différentiels Dm et De afin que celle-ci sélectionne de manière adéquate les ports de sortie de messages.

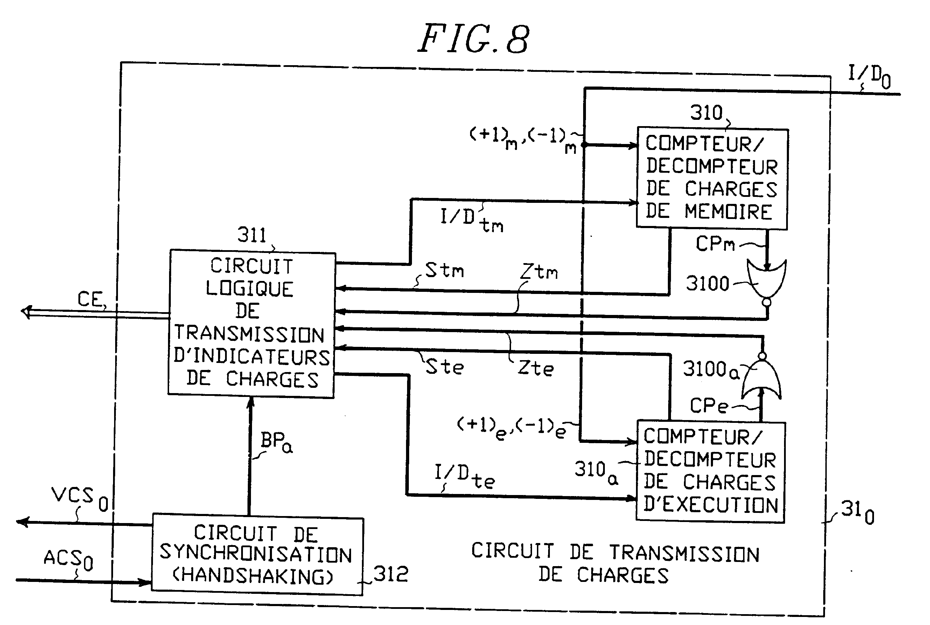

En référence à la Fig. 8, le circuit de transmission de charges 31₀ comprend essentiellement un compteur/décompteur de charges de mémoire 310, un compteur/décompteur de charges d'exécution 310ₐ, un circuit logique de transmission d'indicateurs de charges 311, et un circuit de synchronisation 312.

Le circuit de transmission de charges 31₀ a pour fonction de gérer de manière autonome la transmission des indicateurs de charges externes CE en fonction de comptes de charges. Le circuit 31₀ a un rôle de circuit "tampon" et libère l'unité de gestion 30 de contraintes temporelles liées à la transmission des indicateurs.

Les compteurs/décompteurs 310 et 310ₐ sont analogues et mémorisent respectivement un compte signé de charges de mémoire CPm et un compte signé de charges d'exécution CPe. Les comptes CPm et CPe sont initialisés à zéro à la mise en route du système informatique ou après une opération d'initialisation ultérieure et sont incrémentés et décrémentés en fonction des valeurs prises successivement par la commande I/D₀ fournie par l'unité de gestion de différentiels de charge 30 et des valeurs des indicateurs de charge externes CE successivement transmis par le circuit logique de transmission 311.

La commande d'incrémentation/décrémentation I/D₀ est appliquée à des premières entrées de commande des compteurs/décompteurs 310 et 310ₐ. Des secondes entrées de commande des compteurs/décompteurs 310 et 310ₐ reçoivent respectivement des commandes d'incrémentation/décrémentation I/Dₜₘ et I/Dₜₑ fournies par le circuit logique de transmission 311 lors de la transmission d'indicateurs de charges CE.

Les commandes I/D₀=(+1)ₘ et I/D₀=(-1)ₘ respectivement incrémente et décrémente le compte de charges CPm contenu dans le compteur/décompteur 310. Les commandes I/D₀=(+1)ₑ et I/D₀=(-1)ₘ respectivement incrémente et décrémente le compte de charges CPe contenu dans le compteur/décompteur 310ₐ.

Le circuit logique de transmission d'indicateurs de charges 311 transmet des indicateurs de charges CE=(+1)ₘ, CE=(-1)ₘ, CE=(+1)ₑ, et CE=(-1)ₑ de manière à ramener les comptes de charges CPm et CPe à zéro. A la transmission des indicateurs de charges CE=(+1)ₘ et CE=(-1)ₘ, respectivement CE=(+1)ₑ et CE=(-1)ₑ, correspondent respectivement des commandes I/Dₜₘ=-1 et I/Dₜₘ=+1, respectivement I/Dₜₑ=-1 et I/Dₜₑ=+1.

Afin que le circuit logique de transmission 311 puisse déterminer les valeurs des indicateurs de charges CE à transmettre, des bits Stm, Ztm, Ste, et Zte lui sont fournis à des entrées correspondantes.

Les bits Stm et Ztm sont relatifs au compte de charges CPm et indiquent respectivement le signe et une valeur nulle du compte CPm. Les bits Ste et Zte sont relatifs au compte de charge CPe et indiquent respectivement le signe et une valeur nulle du compte CPe. Les bits de signe Stm et Ste sont lus respectivement dans les compteurs/décompteurs 310 et 310ₐ. Les bits Ztm et Zte sont produits respectivement par des portes NON-OU 3100 et 3100ₐ. Des entrées des portes 3100 et 3100ₐ reçoivent les différents bits autres que les bits de signe des comptes CPm et CPe et délivrent les bits Ztm et Zte, respectivement.

Le circuit de synchronisation 312 gère les signaux de dialogue VCS₀ et ACS₀ pour la transmission asynchrone des indicateurs de charges CE selon la procédure du handshaking. Un signal BPₐ fourni par le circuit de synchronisation 312 indique au circuit logique de transmission 311 la disponibilité ou la non-disponibilité du bus de sortie de charges.

## Revendications

1. Réseau (RE) de communication de messages de données pour système multiprocesseurs comprenant une pluralité de dispositifs de commutation de messages de données (PCₙ-PC₆₄) interconnectés entre eux pour former une architecture de réseau prédéterminée,
chacun des dispositifs de commutation de messages comprenant, pour l'un des deux sens opposés de transmission de message,
(a) des premier et second moyens d'entrée (20₀, 20₁) connectés à des moyens de sortie respectifs situés dans deux dispositifs de commutation de messages disposés en amont dudit chacun des dispositifs de commutation relativement audit un des deux sens opposés de transmission de message,
(b) des premier et second moyens de sortie (21₀, 21₁) connectés à des moyens d'entrée respectifs situés dans deux dispositifs de commutation de messages disposés en aval dudit chacun des dispositifs de commutation relativement audit un des deux sens opposés de transmission de message,
caractérisé en ce que ledit chacun des dispositifs de commutation de messages comprend, en outre,
(c) des moyens de régulation de charges (3) connectés auxdits premier et second moyens d'entrée (20₀, 20₁), auxdits moyens de sortie dans les deux dispositifs de commutation de messages disposés en amont, et auxdits moyens d'entrée dans les deux dispositifs de commutation de message disposés en aval, pour produire des consignes de commutation (PE₀, PE₁), chaque consigne de commutation étant destinée à commander une commutation d'un message de données reçu par l'un desdits premier et second moyens d'entrée (20₀, 20₁) vers l'un ou l'autre desdits premier et second moyens de sortie, (21₀, 21₁) et étant fonction de premières et secondes informations externes (CE₀/ CE₁) de charges qui sont représentatives respectivement de charges dans les premier et second moyens de sortie (21₀, 21₁) et qui sont reçues de moyens de régulation de charges respectifs dans lesdits deux dispositifs de commutation de message disposés en aval, et étant fonction d'informations internes de charge (CI₀, CI₁) qui sont produites respectivement par lesdits premier et second moyens d'entrée (20₀, 20₁) dès réception et avant commutation dudit message de données, en fonction d'une commutation d'un message de données précédent reçu précédemment audit message de données, lesdits moyens de régulation de charges établissant, en outre, d'autres informations externes de charge (CE), qui sont respectivement représentatives de charges desdits moyens de sortie dans lesdits deux dispositifs de commutation de message disposés en amont, qui sont transmises à des moyens de régulation de charge dans lesdits deux dispositifs de commutation de messages disposés en amont, et qui sont calculées en fonction des première et seconde informations externes de charge (CE₀, CE₁) et desdites informations internes de charge (CI₀, CI₁) et,
(d) des moyens de commande (203, 204, 205, 206, 212) répartis dans les premiers et seconds moyens d'entrée et de sortie (20₀, 20₁, 21₀, 21₁) pour commander les commutations de messages en fonction d'informations d'acheminement (RT, AD) incluses dans les messages, en fonction des consignes de commutation (PE₀, PE₁) établies par les moyens de régulation de charges (3), et en fonction de consignes de priorité (212) respectivement affectées auxdits moyens d'entrée (20₀, 20₁) pour sélectionner l'un de ces moyens d'entrée lorsque tous deux demandent simultanément une autorisation de transmission de message à l'un desdits premier et second moyen de sortie (21₀, 21₁), et lesdits moyens de commande produisant lesdites informations internes de charge (CI₀, CI₁).

2. Réseau conforme à la revendication 1, caractérisé en ce que différents types d'information de charge ((+1)ₘ, (+1)ₑ, ...) sont traités et produits par ledit chacun des dispositifs de commutation de messages, lesdits différents types d'information de charge correspondant respectivement à différents types de charges (CHm, CHe) associés respectivement à différents types de traitement auxquels peuvent être soumis les messages dans les moyens d'entrée dans les deux dispositifs de commutation de messages disposés en aval, ou respectivement associées à différents types de moyens d'entrée dans les deux dispositifs de commutation de messages disposés en aval (PEP, PM).

3. Réseau conforme à la revendication 1 ou 2, caractérisé en ce que les messages (ME) et les informations de charge (CE₀, CE₁, CE) sont transférés entre ledit chacun des dispositifs de commutation de messages et les moyens de sortie dans les deux dispositifs de commutation de messages disposés en amont et moyens d'entrée dans les deux dispositifs de commutation de messages disposés en aval selon une procédure de transmission asynchrone.

4. Réseau conforme à l'une quelconque des revendications 1 à 3, caractérisé en ce que chacun des premier et second moyens d'entrée (20₀, 20₁) comprend
une file tampon (200) pour stocker temporairement les messages transmis par les moyens de sortie dans les deux dispositifs de commutation de messages disposés en amont,
des moyens (202) pour contrôler mot par mot des écritures et des lectures des messages dans la file tampon (200),
des moyens (203, 204) pour sélectionner l'un des premier et second moyens de sortie (21₀, 21₁) vers lequel un message lu dans la file tampon (200) est à commuter, ledit moyen de sortie étant sélectionné par décodage des informations d'acheminement (RT, AD) incluses dans le message et en fonction des consignes de commutation (PE₀, PE₁) établies par les moyens de régulation de charges (3),
des moyens (206) pour produire les informations internes de charge (CI₀, CI₁) en fonction des informations d'acheminement (RT) incluses dans le message lu, et
des moyens (205) pour commander la lecture du message dans la file tampon (200), le transfert du message lu et des informations internes de charges (CI₀, CI₁) respectivement vers le moyen de sortie sélectionné (21₀, 21₁) et les moyens de régulation de charges (3), les moyens de commande contrôlant également les fonctionnements des moyens pour sélectionner (203, 204) et des moyens pour produire (206).

5. Réseau conforme à l'une quelconque des revendications 1 à 4, caractérisé en ce que chacun des premier et second moyens de sortie (21₀, 21₁) comprend
des moyens (212) pour sélectionner l'un des moyens d'entrée (20₀, 21₁) en fonction de consignes de priorité prédéterminées affectées aux moyens de sortie dans les deux dispositifs de commutation de messages disposés en amont et aux moyens d'entrée (20₀, 21₁) lorsque les deux moyens d'entrée demandent simultanément chacun une autorisation de transmission de message audit circuit de sortie (21₀, 21₁),
des moyens (213) pour informer le moyen d'entrée sélectionné (20₀, 21₁) que ledit moyen de sortie (21₀, 21₁) autorise la transmission du message, et
des moyens (210, 211) ayant des premières et secondes entrées reliées respectivement aux premier et second moyens d'entrée (20₀, 20₁) et une sortie reliée à un desdits moyens d'entrée dans les deux dispositifs de commutation de messages disposés en aval correspondant audit moyen de sortie pour aiguiller le message dont la transmission est autorisée, du moyen d'entrée sélectionné (20₀, 20₁) vers ledit un desdits moyens d'entrée dans les deux dispositifs de commutation de messages disposés en aval.

6. Réseau conforme à l'une quelconque des revendications 1 à 5, caractérisé en ce que les moyens de régulation de charges (3) comprennent
des moyens (302, 302ₐ) pour mémoriser différents différentiels de comptes de charges (Dm, De) correspondant à différents types de charge, chacun des différentiels ayant une valeur représentative de la différence (Cm₀-Cm₁, Ce₀-Ce₁) entre un nombre de premières informations de charge correspondantes et un nombre de secondes informations de charge correspondantes, ou inversement, transmises par les moyens d'entrée dans les deux dispositifs de commutation de messages disposés en aval,
des moyens (301, I/Dₘ, I/Dₑ) pour incrémenter et décrémenter les différentiels de comptes de charges (Dm, De) en fonction des premières et secondes informations de charge transmises par les moyens d'entrée dans les deux dispositifs de commutation de messages disposés en aval (CE₀, CE₁) et des informations internes de charges (CI₀, CI₁) produites par les premier et second moyens d'entrée (20₀, 20₁), et
des moyens (301) pour déterminer les consignes de commutation (PE₀, PE₁) à fournir aux moyens d'entrée (20₀, 20₁) et
des moyens (301, 31₀, 31₁) pour établir les premières et secondes informations de charge (I/D₀, I/D₁, CE) en fonction des valeurs et variations des différentiels de comptes de charges (Dm, De) afin de transmettre lesdites premières et secondes informations de charge (I/D₀, I/D₁, CE) aux moyens de sortie dans les deux dispositifs de commutation de messages disposés en amont.

7. Réseau conforme à la revendication 6, caractérisé en ce que les moyens de régulation de charges (3) comprennent, en outre,
des moyens pour prévoir l'évolution des valeurs et variations des différentiels de comptes de charges (303, 303ₐ), et
des moyens (301) pour déterminer les consignes de commutation (PE₀, PE₁) à fournir aux premier et second moyens d'entrée (20₀, 20₁) et
des moyens (301) pour établir les premières et secondes informations de charge (I/D₀, _{I}/D₁, CE) en fonction de l'évolution prévue des valeurs et variations des différentiels de comptes de charges afin de transmettre lesdites premières et secondes informations de charge (I/D₀, I/D₁, CE) aux moyens de sortie dans les deux dispositifs de commutation de messages disposés en amont.

## Patentansprüche

1. Datenübertragungsnetzwerk (RE) für Multiprozessorsysteme, das eine Vielzahl von untereinander verbundenen Datenverteilereinrichtungen zur Bildung einer vorgegebenen Netzwerkarchitektur aufweist, wobei jede der Nachrichtenverteilereinrichtungen für eine von zwei entgegengesetzten Nachrichtenübertragungsrichtungen folgende Komponenten aufweist:
(a) Erste und zweite Eingangseinrichtungen (20₀, 20₁), die mit entsprechenden Ausgangseinrichtungen verbunden sind, die in zwei bezüglich der einen der beiden entgegengesetzten Nachrichtenübertragungsrichtungen oberhalb jeder der Verteilereinrichtungen angeordneten Nachrichtenverteilereinrichtungen angeordnet sind,
(b) erste und zweite Ausgangseinrichtungen (21₀, 21₁), die jeweils mit Eingangseinrichtungen in zwei Nachrichtenverteilereinrichtungen verbunden sind, die bezüglich der einen der beiden entgegengesetzten Nachrichtenübertragungsrichtungen unterhalb jeder der Verteilereinrichtungen angeordnet sind,
dadurch gekennzeichnet, daß jede der Nachrichtenverteilereinrichtungen außerdem folgende Komponenten aufweist:
(c) Einrichtungen zur Ladungsregelung (3), die mit den ersten und zweiten Eingangseinrichtungen (20₀, 20₁), mit den Ausgangseinrichtungen in den oberhalb angeordneten Nachrichtenverteilereinrichtungen und mit den Eingangseinrichtungen in den unterhalb angeordneten Nachrichtenverteilereinrichtungen verbunden sind, um Verteilungsanweisungen (PE₀, PE₁) zu bilden, wobei jede Verteilungsanweisung dazu bestimmt ist, eine Nachrichtenverteilung aus Daten zu steuern, die von einem der ersten und zweiten Eingangseinrichtungen (20₀, 20₁) über den einen oder den anderen der ersten und zweiten Ausgangseinrichtungen (21₀, 21₁) empfangen werden und die Funktion von ersten und zweiten externen Ladungsinformationen (CE₀, CE₁), die jeweils die Ladungen in den ersten und zweiten Ausgangseinrichtungen (21₀, 21₁) repräsentieren und die von den Ladungsregelungseinrichtungen in den beiden unterhalb angeordneten Nachrichtenverteilereinrichtungen empfangen werden, und die Funktion von internen Ladungsinformationen (CI₀, CI₁) haben, die jeweils von den ersten und zweiten Eingangseinrichtungen (20₀, 20₁) vor Empfang und nach Verteilung der Daten als Funktion einer vorangehenden Nachrichtenverteilung gebildet werden, die vor dieser Datennachricht empfangen worden ist, wobei die Ladungsregelungseinrichtungen außerdem andere externe Ladungsinformationen (CE) bilden, die jeweils für die Ladungen der Ausgangseinrichtungen in den beiden oberhalb angeordneten Nachrichtenverteilereinrichtungen repräsentativ sind, die zu den Ladungsregelungseinrichtungen in den beiden oberhalb angeordneten Nachrichtenverteilereinrichtungen übertragen werden, und die als Funktion der ersten und zweiten externen Ladungsinformationen (CE₀, CE₁) und den internen Ladungsinformationen (CI₀, CI₁) berechnet werden, und,
(d) Steuereinrichtungen (203, 204, 205, 206, 212), die auf die ersten und zweiten Eingangs- und Ausgangseinrichtungen (20₀, 20₁, 21₀, 21₁) verteilt sind, um die Nachrichtenverteilung in Abhängigkeit von Übermittlungsinformationen (RT, AD), die in den Nachrichten beinhaltet sind, in Abhängigkeit der Verteilungsanweisungen (PE₀, PE₁), die von den Ladungsregelungseinrichtungen (3) gebildet werden, und in Abhängigkeit von Prioritätsanweisungen (212) zu steuern, die die Eingangseinrichtungen (20₀, 20₁ beeinflussen, um einen dieser Eingangseinrichtungen auszuwählen, wenn beide gleichzeitig eine Genehmigung zur Nachrichtenübertragung von einem der ersten und zweiten Ausgangseinrichtungen (21₀, 21₁) anfordern, und wobei die Steuereinrichtungen die internen Ladungsinformationen (CI₀, CI₁) bilden.

2. Netzwerk nach Anspruch 1, dadurch gekennzeichnet, daß die unterschiedlichen Typen von Ladungsinformationen ((+1)₁, (+1)ₑ, ...) von jedem der Nachrichtenverteilereinrichtungen verarbeitet und gebildet werden, wobei die unterschiedlichen Typen von Ladungsinformationen jeweils unterschiedlichen Ladungstypen (CHm, CHe) entsprechen, die jeweils mit unterschiedlichen Typen von Verarbeitung, denen die Nachrichten in den Eingangseinrichtungen in den beiden unterhalb angeordneten Nachrichtenverteilereinrichtungen unterworfen werden können, oder jeweils mit unterschiedlichen Typen von Eingangseinrichtungen in den beiden unterhalb angeordneten Nachrichtenverteilereinrichtungen (PEP, PM) verbunden sind.

3. Netzwerk nach Anspruch 1 oder 2, dadurch gekennzeichnet, daß die Nachrichten (ME) und die Ladungsinformationen (CE₀, CE₁, CE) zwischen jedem der Nachrichtenverteilereinrichtungen und den Ausgangseinrichtungen in den oberhalb angeordneten Nachrichtenverteilereinrichtungen und den Eingangseinrichtungen in den unterhalb angeordneten Nachrichtenverteilereinrichtungen nach einem asynchronen Übertragungsverfahren übertragen werden.

4. Netzwerk nach einem der Ansprüche 1 bis 3, dadurch gekennzeichnet, daß jeder der ersten und zweiten Eingangseinrichtungen (20₀, 20₁) folgendes aufweist:
- eine Pufferreihe (200), um zeitweilig die von den Ausgangseinrichtungen in den oberhalb angeordneten Nachrichtenverteilereinrichtungen übertragenen Nachrichten zu speichern,
- Einrichtungen (202) zur wortweisen Kontrolle des Schreibens und des Lesens der Nachrichten in die Pufferreihe (200),
- Einrichtungen (203, 204) zur Auswahl einer der ersten und zweiten Ausgangseinrichtungen (21₀, 21₁), über die eine in die Pufferreihe (200) eingelesene Nachricht zu verteilen ist, wobei diese Ausgangseinrichtung durch Decodieren der Übermittlungsinformationen (RT, AD), die in der Nachricht enthalten sind, in Abhängigkeit von den Verteilungsanweisungen (PE₀, PE₁), die von den Ladungsregelungseinrichtungen (3) aufgestellt werden, ausgewählt wird,
- Einrichtungen (206) zur Bildung interner Ladungsinformationen (CI₀, CI₁) in Abhängigkeit der Übertragungsinformationen (RT), die in der gelesenen Nachricht enthalten sind, und
- Einrichtungen (205) zur Steuerung des Auslesens der Nachricht aus der Pufferreihe (200), der Übertragung der ausgelesenen Nachricht und der internen Ladungsinformationen (CI₀, CI₁) über die ausgewählte Ausgangseinrichtung (21₀, 21₁) und die Ladungsregelungseinrichtungen (3), wobei die Steuereinrichtungen auch die Funktionen der Selektionseinrichtungen (203, 204) und der Einrichtungen zur Bildung (206) kontrollieren.

5. Netzwerk nach einem der Ansprüche 1 bis 4, dadurch gekennzeichnet, daß jede der ersten und zweiten Ausgangseinrichtungen (21₀, 21₁) folgende Komponenten aufweist:
- Einrichtungen (212) zur Auswahl einer der Eingangseinrichtungen (20₀, 21₁) in Abhängigkeit der vorgegebenen Prioritätsanweisungen, die die Ausgangseinrichtungen der oberhalb angeordneten Nachrichtenverteilereinrichtungen und die Eingangseinrichtungen (20₀, 21₁) beeinflussen, wenn die beiden Eingangseinrichtungen gleichzeitig eine Nachrichtenübertragungserlaubnis von der Ausgangsschaltung (21₀, 21₁) anfordern,
- Einrichtungen (213), um die ausgewählte Eingangseinrichtung (20₀, 21₁) zu informieren, daß die Ausgangseinrichtung (21₀, 21₁) die Nachrichtenübertragung erlaubt, und
- Einrichtungen (210, 211), die erste und zweite Eingänge, die jeweils mit der ersten und zweiten Eingangseinrichtung (20₀, 20₁) verbunden sind, und einen Ausgang aufweisen, der mit einer der Eingangseinrichtungen in den unterhalb angeordneten Nachrichtenverteilereinrichtungen verbunden ist, die der Ausgangseinrichtung entspricht, um die Nachricht, deren Übertragung erlaubt worden ist, von der ausgewählten Eingangseinrichtung (20₀, 20₁) zu einer der Eingangseinrichtungen in den unterhalb angeordneten Nachrichtenverteilereinrichtungen zu leiten.

6. Netzwerk nach einem der Ansprüche 1 bis 5, dadurch gekennzeichnet, daß die Ladungsregelungseinrichtungen (3) folgende Komponenten aufweisen:
- Einrichtungen (302, 302ₐ) zum Speichern unterschiedlicher Differentiale von Ladungszahlen (DM, DE), die unterschiedlichen Ladungstypen entsprechen, wobei jedes Differential einen Wert aufweist, der der Differenz (CM₀-CM₁, CE₀-CE₁) zwischen einer Zahl von entsprechenden ersten Ladungsinformationen und einer Zahl von entsprechenden zweiten Ladungsinformationen entspricht, oder umgekehrt, die von den Eingangseinrichtungen in den unterhalb angeordneten Nachrichtenverteilereinrichtungen übertragen werden,
- Einrichtungen (301, I/Dₘ, I/Dₑ) zum Inkrementieren und Dekrementieren der Differentiale der Ladungszahlen (Dm, De) in Abhängigkeit von den ersten und zweiten Ladungsinformationen, die von den Eingangseinrichtungen in den unterhalb angeordneten Nachrichtenverteilereinrichtungen (CE₀, CE₁) übertragen werden, und den internen Ladungsinformationen (CI₀, CI₁), die von den ersten und zweiten Eingangseinrichtungen (20₀, 20₁) gebildet werden, und
- Einrichtungen (301) zur Festlegung der Verteilungsanweisungen (PE₀, PE₁), um sie den Eingangseinrichtungen (20₀, 20₁) zur Verfügung zu stellen, und
- Einrichtungen (301, 31₀, 31₁) zur Bildung von ersten und zweiten Ladungsinformationen (I/D₀, I/D₁, CE) in Abhängigkeit der Werte und Veränderungen der Differentiale der Ladungszahlen (Dm, De), um diese ersten und zweiten Ladungsinformationen (I/D₀, I/D₁, CE) zu den Ausgangseinrichtungen in den oberhalb angeordneten Nachrichtenverteilereinrichtungen zu übertragen.

7. Netzwerk nach Anspruch 6, dadurch gekennzeichnet, daß die Ladungsregelungseinrichtungen (3) außerdem Einrichtungen zum Vorhersehen der Entwicklung der Werte und Veränderungen der Differentiale der Ladungszahlen (303, 303ₐ), und
- Einrichtungen (301) zur Bestimmung der Verteilungsanweisungen (PE₀, PE₁), die an die ersten und zweiten Eingangseinrichtungen (20₀, 20₁) geliefert werden, und
- Einrichtungen (301) zur Bildung der ersten und zweiten Ladungsinformationen (I/D₀, I/D₁, CE) in Abhängigkeit der vorhergesehenen Entwicklung der Werte und Veränderungen der Differentiale der Ladungszahlen, um diese ersten und zweiten Ladungsinformationen (I/D₀, I/D₁, CE) zu den Ausgangseinrichtungen in den oberhalb angeordneten Nachrichtenverteilereinrichtungen zu übertragen,
aufweisen.

## Claims

1. Data message communication network (RE) for multiprocessor system comprising a plurality of data message switching devices (PC₁₁-PC₆₄) interconnected with each other to form a predetermined network architecture,
each of the message switching devices comprising for one of two opposite message transmission directions,
(a) first and second input means (20₀,20₁) connected to respective output means situated in two message switching devices located upstream of said each of the switching devices with respect to said one of the two opposite message transmission directions,
(b) first and second output means (21₀,20₁) connected to respective input means situated in two message switching devices located downstream of said each of the switching devices with respect to said one of the opposite two message transmission directions,
characterized in that said each of the message switching devices further comprises
(c) load regulating means (3) connected to said first and second input means (20₀, 20₁), said output means in the two upstream-located message switching devices, and said input means in the two downstream-located message switching devices, for deriving switching instructions (PE₀, PE₁), each switching instruction being intented to control a switching of a data message received by one of said first and second input means (20₀, 20₁) towards the one or the other of said first and second output means (21₀, 21₁) and being as a function of first and second external load information (CE₀, CE₁) which are respectively representative of loads in the first and second output means (21₀, 21₁) and which are received from respective load regulating means in said two downstream-located message switching devices, and being as a function of internal load information (CI₀, CI₁) which are respectively derived from said first and second input means (20₀, 20₁) as soon as said data message is received and before said data message is switched, as a function of a switching of a previous data message received previously to said data message, said load regulating means further deriving other external load information (CE) which are respectively representative of loads in said output means in said two upstream-located message switching devices which are transmitted to load regulating means in said two upstream-located message switching devices and which are calculated as a function of the first and second external load information (CE₀, CE₁) and said internal load information (CI₀, CI₁), and
(d) control means (203, 204, 205, 206, 212) distributed in the first and second input and output means (20₀, 20₁, 21₀, 21₁) for controlling the switchings of messages as a function of routing informations (RT, AD) included in the messages, as a function of the switching instructions (PE₀, PE₁) derived by the load regulating means (3) and as a funtion of priority instructions (212) respectively assigned to said input means (20₀, 20₁) to select one of these input means when both of them simultaneously request a message transmission authorization to one of said first and second output means (21₀, 21₁), and said control means delivering said internal laod information.

2. Network according to claim 1, characterized in that different types of load information ((+1)ₘ, (+1)ₑ...) are processed and derived by said each one of the message switching devices, said different types of load information respectively corresponding to different types of loads (CHm, CHe) respectively associated with different types of processing to which the messages in the input means in the two downstream-located message switching devices can be submitted, or respectively associated to different types of input means in the two downstream-located message switching devices (PEP, PM).

3. Network according to claim 1 or 2, characterized in that the messages (ME) and the load information (CE₀, CE₁, CE) are transferred between said each of the message switching devices and the output means in the two upstream-located message switching devices and input means in the two downstream-located message switching devices according to an asynchronous transmission process.

4. Network according to any one of claims 1 to 3, characterized in that each of the first and second input means (20₀, 20₁)comprises
a buffer queue (200) for temporarily stocking the messages transmitted by the output means in the two upstream-located message switching devices,
means (202) for word by word controlling message writings and readings in the buffer queue (200),
means (203, 204) for selecting one of the first and second output means (21₀, 21₁) toward which a message read in the buffer queue (200) is to be switched, said output means being selected by decoding the routing information (RT, AD) included in the message and as a function of the switching instructions (PE₀, PE₁) derived by the load regulating means (3),
means (206) for deriving the internal load information (CI₀, CI₁) as a function of the routing information (RT) included in the read message, and
means (205) for controlling the reading of the message in the buffer queue (200), the transferring of the read message and the internal load information (CI₀, CI₁) respectively to the selected output means (21₀, 21₁) and the load regulating means (3), the controlling means also checking the operations of the selecting means (203, 204) and deriving means (206).

5. Network according to any one of claims 1 to 4, characterized in that each of the first and second output means (21₀, 21₁) comprises
means (212) for selecting one of the input means (20₀, 20₁) as a function of predetermined priority instructions assigned to the output means in the two downstream-located message switching devices and to the input means (20₀, 20₁) when the two input means simultaneously each request a message transmission authorization to said output means (21₀, 21₁),
means (213) for informing the selected input means (20₀, 20₁) that said output means (21₀, 21₁) authorizes the message transmission, and
means (210, 211) having first and second inputs respectively connected to the first and second input means (20₀, 20₁) and an output connected to one of said input means in the two downstream-located message switching devices corresponding to said output means for switching over the message whose transmission is authorized, from the selected input means (20₀, 20₁) towards one of said input means in the two downstream-located message switching devices.

6. Network according to any one of claims 1 to 5, characterized in that the load regulating means (3) comprise
means (302, 302ₐ) for memorizing different load count differentials (Dm, De) corresponding to different types of load, each of the differentials having a value representative of the difference (Cm₀-Cm₁, Ce₀-Ce₁) between a number of corresponding first load information and a number of corresponding second load information, or reciprocally, transmitted by the input means in the two downstream-located message switching devices,
means (301, I/Dₘ, I/Dₑ) for incrementing and decrementing the load count differentials (Dm, De) as a function of the first and second load information transmitted by the input means in the two downstream-located message switching devices (CE₀, CE₁) and the internal load information (CI₀, CI₁) derived by the first and second input means (20₀, 20₁), and
means (301) for determining the switching instructions (PE₀, PE₁) to be supplied to the input means (20₀, 20₁), and
means (301, 310, 311) for deriving the first and second load information (I/D₀, I/D₁, CE) as a function of the values and variations of the load count differentials (Dm, De), thereby transmitting said first and second load informations (I/D₀, I/D₁, CE) to the output means in the two upstream-located message switching devices.

7. Network according to claim 6, characterized in that the load regulating means (3) further comprise
means for forecasting the evolution of values and variations of the load count differentials (303, 303ₐ), and
means (301) for determining the switching instructions (PE₀, PE₁) to be supplied to the first and second input means (20₀, 20₁), and
means (301) for deriving the first and second load information (I/D₀, I/D₁, CE) as a function of the forecast evolution of the values and variations of the load count differentials, thereby transmitting said first and second load information (I/D₀, I/D₁, CE) to the output means in the two upstream-located message switching devices.
